# EUROPÄISCHE PATENTSCHRIFT

(11) **EP 0 714 901 B1**
(45) Veröffentlichungstag und Bekanntmachung des Hinweises auf die Patenterteilung: **01.03.2000**
(21) Anmeldenummer: 95116015.9
(22) Anmeldetag: 11.10.1995
(51) Int. Cl.: C07F 7/14, C07F 7/12

(54) **Verfahren zur Herstellung von Alkylchlorsilanen durch Hydrosilylierung**
Process for preparing alkyl chloro silanes using hydrosilation
Procédé pour la préparation d'alkylchlorosilanes utilisant l'hydrosilylation

(30) Priorität: 01.12.1994 DE 4442754
(43) Veröffentlichungstag der Anmeldung: 05.06.1996
(73) Patentinhaber: Degussa-Hüls Aktiengesellschaft, 60287 Frankfurt am Main (DE)
(72) Erfinder: Schuler, Joachim, Dr., D-45772 Marl (DE)

(56) Entgegenhaltungen:
- MARCINIEC, B. 'COMPREHENSIVE HANDBOOK ON HYDROSILYLATION' 1991 , PERGAMON PRESS , OXFORD * Seite 3 - Seite 8 *
- CHEMICAL ABSTRACTS, vol. 119, no. 7, 16.August 1993 Columbus, Ohio, US; abstract no. 72830u, VERENINOV, G.M. ET AL. 'SYNTHESIS OF HYDROGEN CONTAINING CHLORO- AND ORGANOCHLOROSILANES' & IZOBRETENIYA, Nr. 37, 1992 Seite 91

## Beschreibung

Die vorliegende Erfindung betrifft ein Verfahren zur Herstellung von Alkylchlorsilanen der allgemeinen Formel I

R₍₄₋ₙ₋ₘ₎ Si Clₙ R¹ ₘ (I),

wobei m gleich 1 oder 2 und n gleich 1 oder 2 und m + n ≤ 3 ist, R eine Alkylgruppe mit 1 bis 5 Kohlenstoffatomen und R¹ einen organischen Rest darstellen,
durch Hydrosilylierung.

Alkylchlorsilane der allgemeinen Formel I besitzen einen weiten Anwendungsbereich, unter anderem bei der Synthese von Silikonkautschuken und funktionalisierten Organosilanen. Beispielsweise werden Vinylalkylchlorsilane bei der Herstellung von Fest- und Flüssigsilikonkautschuken eingesetzt. Die Vinylgruppe dient zur Vernetzung der Kautschuke mit Hilfe von Peroxiden oder durch Additionsreaktionen (Hydrosilylierung unter Pt-Katalyse) [Silicone-Chemie und Technologie, Symposium am 28.08.1989, Vulkan-Verlag Essen (1989), S. 65 ff.]. Alkylchlorsilane lassen sich nach der Hydrosilylierung von Acetylen zum Beispiel durch eine Reaktion mit einem Alkohol zu Vinylalkoxysilanen umsetzten [Silicone-Chemie und Technologie, Symposium am 28.08.1989, Vulkan-Verlag Essen (1989), S. 104].

Die Hydrosilylierung von Alkenen und Alkinen gelingt unter anderem durch eine radikalisch oder radikalisch/ionisch durchgeführte Reaktion. Als Initiatoren werden dabei zum Beispiel N,N'-Azobisisobutylnitril oder UV-Strahlung eingesetzt. Die Hydrosilylierung wird zum Beispiel ionisch/radikalisch auch in Gegenwart von Kupfer(I)-Chlorid mit Triphenylamin als Initiator durchgeführt [M. Wick, G. Kreis, F.-H. Kreuzer, Ullmanns Encyklopädie der technischen Chemie, Band 21, 4. Auflage, Verlag Chemie, S. 492-493 (1982)].

Technische Anwendung findet die Hydrosilylierung unter Einsatz eines Edelmetalls bzw. einer Edelmetallverbindung als Katalysator. Als heterogene Katalysatoren kommen Pt- oder Rh-Träger-Katalysatoren mit Aktivkohle als Träger in Frage [M. Wick, G. Kreis, F.-H. Kreuzer, Ullmanns Encyklopädie der technischen Chemie, Band 21, 4. Auflage, Verlag Chemie, S. 492-493 (1982)]. Homogen, ggf. in Gegenwart eines Lösemittels, wird die Hydrosilylierung unter anderem durch H₂PtCl₆ katalysiert [US 3 793 358, DE-OS 21 31 741, DE-OS 21 31 742, DE-AS 12 32 580].

Die technisch interessanten Verbindungen - Dimethylchlorsilan (DMCS) und Methyldichlorsilan (MDCS) - können als Einsatzstoffe für die Hydrosilylierungsreaktion, zum Beispiel als Nebenprodukte der Rochow-Synthese, erhalten werden oder sind durch eine katalytische Spaltung des Rückstandes der Rochow-Synthese zugänglich [M. Wick, G. Kreis, F.-H. Kreuzer, Ullmanns Encyklopädie der technischen Chemie, Band 21, 4. Auflage, Verlag Chemie, S. 748-769 (1982)]. Um hinreichend große Mengen dieser Edukte bereitzustellen, sind Selektivitätseinbußen bei der Rochow-Synthese in Kauf zu nehmen. Außerdem ist eine aufwendige destillative Stofftrennung notwendig.

Eine gezielte Synthese von DMCS aus Dimethyldichlorsilan (DMDCS) gelingt auch durch die Reduktion von DMDCS mit Metallhydriden, so zum Beispiel mit LiH [21.06.89-JP-158938], NaH/NaBH₄ [02.02.77-JA-010373], CaH₂, (TiH₂)ₙ [J. Organomet. Chem. 206 (3), 279-286 (1981)].

Bei der Reduktion von DMDCS mit LiH in einer LiCl/KCl-Schmelze bei 355 °C bis 470 °C erhält man eine Ausbeute von 8 % bis 17 % DMCS [21.06.89-JP-158938]. Bei dieser Reaktionsführung fallen aufgrund der Stöchiometrie der Reaktion jedoch große Mengen LiCl pro Einheit des gebildeten DMCS an.

Die Reduktion von DMDCS mit NaBH₄/NaH in Hexamethylphosphorsäureamid als Lösemittel bei Temperaturen von 40 °C bis 80 °C führt zu einer DMCS-Ausbeute von 71 % [02.02.77-JA-010373]. Neben dem Einsatz eines krebserzeugenden Gefahrstoffes als Lösemittel hat dieser Syntheseweg den Nachteil, daß große Mengen NaCl pro Einheit des gebildeten DMCS anfallen.

Des weiteren läßt sich MDCS in einer Grignard-Reaktion zu DMCS umsetzen [K. Schnurrbusch, Ullmanns Encyklopädie der technischen Chemie, Band 15, Urban & Schwarenberg-Verlag, S. 748-769 (1964)].

In einer noch nicht veröffentlichten deutschen Patentanmeldung gleicher Priorität mit dem Titel "Alkylhydrogenchlorsilane Verfahren zu deren Herstellung und deren Verwendung" (P 44 42 753.0) EP-A-0714900 wird offenbart, daß Alkylhydrogenchlorsilane der allgemeinen Formel III

R₍₄₋ₙ₋ₘ₎ Si Clₙ Hₘ (III),

wobei m gleich 1 oder 2 und n gleich 1 oder 2 und m + n ≤ 3 ist, R eine Alkylgruppe mit 1 bis 5 Kohlenstoffatomen bedeutet,
durch eine katalytische Umsetzung von Alkylchlorsilanen der allgemeinen Formel II

R₍₄₋ₚ₎ Si Clₚ (II),

wobei p gleich 1 oder 2 oder 3 ist,
mit Wasserstoff in einfacher und wirtschaftlicher Weise erhältlich sind. Aus dem so gebildeten Alkylhydrogenchlorsilan-haltigen Reaktionsprodukt können die Alkylhydrogenchlorsilane durch eine einfache destillative Aufarbeitung des Reaktionsproduktes auch einzeln erhalten werden.

Der Erfindung liegt die Aufgabe zugrunde, ein Verfahren zu entwickeln, das es ermöglicht, Alkylchlorsilane der allgemeinen Formel I auf eine besonders wirtschaftliche Weise herzustellen.

Es wurde nun gefunden, daß Alkylhydrogenchlorsilane der allgemeinen Formel III, so wie diese in dem Reaktionsgemisch, das bei der katalytischen Umsetzung von Alkylchlorsilanen der allgemeinen Formel II mit Wasserstoff entsteht, enthalten sind, direkt im Reaktionsgemisch zur Hydrosilylierung verwendet werden können. Die erzielten Ausbeuten an Alkylchlorsilanen der allgemeinen Formel I sind sehr gut. Der Vorteil des erfindungsgemäßen Verfahrens besteht darin, daß eine besonders wirtschaftliche Eduktbasis gefunden wurde, wobei bei der Herstellung der Edukte ein Zwangsanfall von Alkalichloriden vermieden werden konnte.

Gegenstand der vorliegenden Erfindung ist daher ein Verfahren zur Herstellung von Alkylchlorsilanen der allgemeinen Formel I

R₍₄₋ₙ₋ₘ₎ Si Clₙ R¹ ₘ (I)

wobei m gleich 1 oder 2 und n gleich 1 oder 2 und m + n ≤ 3 sind, R eine Alkylgruppe mit 1 bis 5 Kohlenstoffatomen und R¹ einen organischen Rest darstellen,
durch Hydrosilylierung, das dadurch gekennzeichnet ist,
daß man die im Reaktionsgemisch, welches bei der katalytischen Umsetzung von Alkylchlorsilanen der allgemeinen Formel II

R₍₄₋ₚ₎ Si Clₚ (II),

wobei p gleich 1 oder 2 oder 3 ist, mit Wasserstoff entsteht, enthaltenen Alkylhydrogenchlorsilane der allgemeinen Formel III

R₍₄₋ₙ₋ₘ₎ Si Clₙ Hₘ (III),

wobei m gleich 1 oder 2 und n gleich 1 oder 2 und m + n ≤ 3 sind, R eine Alkylgruppe mit 1 bis 5 Kohlenstoffatomen darstellt,
direkt, ohne Zwischen isolierung, mit einer Verbindung der Form R² umsetzt, welche dieselbe Anzahl an Kohlenstoffatomen wie der organische Rest R¹ besitzt und mindestens ein Wasserstoffatom weniger als der organische Rest R¹ enthält.

Verbindungen der Form R² sind Alkene, wie 1-Buten, 1-Hexen oder Alkenyl-Verbindungen, wie Allylchlorid, Acrylsäureethylester, Vinylessigsäurenitril, oder Alkine, wie Acetylen, 1-Butin, 1-Hexin, oder Alkinyl-Verbindungen, wie Propargylbenzol, Propargylsäuremethylester oder organische Verbindungen mit konjugierten und/oder kumulierten Doppel- und/oder Dreifachbindungen, wie Allen, Butadien, Diacetylen.

## Patentansprüche

1. Verfahren zur Herstellung von Alkylchlorsilanen der allgemeinen Formel I
R₍₄₋ₙ₋ₘ₎ Si Clₙ R¹ ₘ (I)
wobei m gleich 1 oder 2 und n gleich 1 oder 2 und m + n ≤ 3 sind , R eine Alkylgruppe mit 1 bis 5 Kohlenstoffatomen und R¹ einen organischen Rest darstellen,
durch Hydrosilylierung,
dadurch gekennzeichnet,
daß man die im Reaktionsgemisch, welches bei der katalytischen Umsetzung von Alkylchlorsilanen der allgemeinen Formel II
R₍₄₋ₚ₎ Si Clₚ (II),
wobei p gleich 1 oder 2 oder 3 ist, mit Wasserstoff entsteht, enthaltenen Alkylhydrogenchlorsilane der allgemeinen Formel III
R₍₄₋ₙ₋ₘ₎ Si Clₙ Hₘ (III),
wobei m gleich 1 oder 2 und n gleich 1 oder 2 und m + n ≤ 3 sind, R eine Alkylgruppe mit 1 bis 5 Kohlenstoffatomen darstellt,
direkt, ohne Zwischenisolierung, mit einem Alken, einer Alkenylverbindung, einem Alkin, einer Alkinyl-Verbindung oder einer organischen Verbindung mit konjugierten und/oder kumulierten Doppel- und/oder Dreifachbindungen umsetzt, welche dieselbe Anzahl an Kohlenstoffatomen wie der organische Rest R¹ besitzt und mindestens ein Wasserstoffatom weniger als der organische Rest R¹ enthält.

2. Verfahren nach Anspruch 1,
dadurch gekennzeichnet,
daß die Umsetzung der Alkylhydrogenchlorsilane der allgemeinen Formel III in der Flüssigphase erfolgt.

3. Verfahren nach Anspruch 2,
dadurch gekennzeichnet,
daß die Umsetzung der Alkylhydrogenchlorsilane der allgemeinen Formel III in der Flüssigphase in Gegenwart eines Lösemittels erfolgt.

4. Verfahren nach den Ansprüchen 1 bis 3,
dadurch gekennzeichnet,
daß die im Reaktionsgemisch enthaltenen Alkylhydrogenchlorsilane der allgemeinen Formel III in Gegenwart eines Katalysators umgesetzt werden.

5. Verfahren nach Anspruch 4,
dadurch gekennzeichnet,
daß man die Umsetzung an Hexachloroplatinsäure als Katalysator durchführt.

6. Verfahren nach den Ansprüchen 1 bis 5,
dadurch gekennzeichnet,
daß die Umsetzung bei einer Temperatur zwischen 50 °C und 180 °C durchgeführt wird.

7. Verfahren nach den Ansprüchen 1 bis 6,
dadurch gekennzeichnet,
daß die Umsetzung unter Normaldruck oder erhöhtem Druck durchgeführt wird.

8. Verfahren nach den Ansprüchen 1 bis 7,
dadurch gekennzeichnet,
daß die Alkylchlorsilane der allgemeinen Formel I aus dem Produktgemisch destillativ abgetrennt werden.

## Claims

1. A process for preparing alkylchlorosilanes of the general formula I
R₍₄₋ₙ₋ₘ₎ Si Clₙ R¹ ₘ (I),
where m is equal to 1 or 2 and n is equal to 1 or 2 and m + n ≤ 3, R is an alkyl group having from 1 to 5 carbon atoms and R¹ is an organic radical,
by hydrosilylation,
characterized in that the alkylhydrogenchlorosilanes of the general formula III
R₍₄₋ₙ₋ₘ₎ Si Clₙ Hₘ (III),
where m is equal to 1 or 2 and n is equal to 1 or 2 and m + n ≤ 3, and R is an alkyl group having from 1 to 5 carbon atoms,
which are present in the reaction mixture formed in the catalytic reaction of alkylchlorosilanes of the general formula II
R₍₄₋ₚ₎ Si Clₚ (II),
where p is equal to 1 or 2 or 3, with hydrogen, are reacted directly, without intermediate isolation, with an alkene, an alkenyl compound, an alkyne, an alkynyl compound or an organic compound having conjugated and/or cumulated double and/or triple bonds which has the same number of carbon atoms as the organic radical R¹ and contains at least one hydrogen atom less than the organic radical R¹.

2. A process according to claim 1,
characterized in that the reaction of the alkylhydrogenchlorosilanes of the general formula III is carried out in the liquid phase.

3. A process according to claim 2,
characterized in that the reaction of the alkylhydrogenchlorosilanes of the general formula III is carried out in the liquid phase in the presence of a solvent.

4. A process according to any of claims 1 to 3,
characterized in that the alkylhydrogenchlorosilanes of the general formula III present in the reaction mixture are reacted in the presence of a catalyst.

5. A process according to claim 4,
characterized in that the reaction is carried out over hexachloroplatinic acid as catalyst.

6. A process according to any of Claims 1 to 5,
characterized in that the reaction is carried out at a temperature of from 50°C to 180°C.

7. A process according to any of claims 1 to 6,
characterized in that the reaction is carried out at atmospheric pressure or under increased pressure.

8. A process according to any of claims 1 to 7,
characterized in that the alkylchlorosilanes of the general formula I are separated from the product mixture by distillation.

## Revendications

1. Procédé de fabrication d'alkylchlorosilanes de formule générale I
R₍₄₋ₙ₋ₘ₎ SiClₙR¹ ₘ (I)
dans laquelle m vaut 1 ou 2, n vaut 1 ou 2 et m + n ≤ 3, R représente un groupe alkyle ayant de 1 à 5 atomes de carbone et R¹ représente un radical organique,
par hydrosilylation,
caractérisé en ce que,
dans le mélange réactionnel qui apparaît lors de la réaction catalytique d'alkylchlorosilanes de formule générale II
R₍₄₋ₚ₎ SiClₚ (II)
où p vaut 1, 2 ou 3 avec de l'hydrogène,
on fait réagir directement sans procéder à un isolement intermédiaire, les alkyl-hydrogénochlorosilanes contenus de formule générale III,
R₍₄₋ₙ₋ₘ₎ SiClₙHₘ (III)
dans laquelle m vaut 1 ou 2, n vaut 1 ou 2 et m + n ≤ 3, R représente un groupe alkyle ayant de 1 à 5 atomes de carbone,
avec un alcène, un composé d'alcényle, un alcyne, un composé alkinyle ou un composé organique avec doubles et/ou triples liaisons conjuguées et/ou cumulées, qui possède le même nombre d'atomes de carbone que le radical organique R¹ et qui contient au moins un atome d'hydrogène de moins que le radical organique R¹.

2. Procédé selon la revendication 1, caractérisé en ce qu'
on conduit la réaction des alkyl-hydrogénochlorosilanes de formule III en phase liquide.

3. Procédé selon la revendication 2,
caractérisé en ce qu'
on conduit la réaction des alkyl-hydrogénochlorosilanes de formule générale III en phase liquide en présence d'un solvant.

4. Procédé selon les revendications 1 à 3,
caractérisé en ce qu'
on fait réagir les alkyl-hydrogénochlorosilanes de formule générale III contenus dans le mélange réactionnel en présence d'un catalyseur.

5. Procédé selon la revendication 4,
caractérisé en ce qu'
on conduit la réaction sur l'acide hexachloroplatinique comme catalyseur.

6. Procédé selon les revendications 1 à 5,
caractérisés en ce qu'
on conduit la réaction à une température comprise entre 50°C et 180°C.

7. Procédé selon les revendications 1 à 6,
caractérisé en ce qu'
on conduit la réaction à pression normale ou à une pression accrue.

8. Procédé selon les revendications 1 à 7,
caractérisé en ce qu'
on sépare les alkylchlorosilanes de formule générale I du mélange de produits par distillation.
